# EUROPÄISCHE PATENTSCHRIFT

(11) **EP 0 958 164 B1**
(45) Veröffentlichungstag und Bekanntmachung des Hinweises auf die Patenterteilung: **12.08.2009**
(21) Anmeldenummer: 98906914.1
(22) Anmeldetag: 04.02.1998
(51) Int. Cl.: B60T 8/00, B60R 16/02, B60K 28/16, B60K 31/00, F02D 41/12

(54) **VERFAHREN UND VORRICHTUNG ZUR REGELUNG DER LÄNGSDYNAMIK EINES FAHRZEUGS**
METHOD AND DEVICE FOR REGULATING THE LONGITUDINAL DYNAMICS OF A VEHICLE
PROCEDE ET DISPOSITIF POUR LA REGULATION DE LA DYNAMIQUE LONGITUDINALE D'UN VEHICULE

(30) Priorität: 08.02.1997 DE 19704841
(43) Veröffentlichungstag der Anmeldung: 24.11.1999
(73) Patentinhaber: Continental Teves AG & Co. oHG, 60488 Frankfurt am Main (DE)
(72) Erfinder: ECKERT, Alfred, D-55129 Mainz (DE)
(74) Vertreter: Dusil, Vladimir
(86) Internationale Anmeldenummer: PCT/EP1998/000601
(87) Internationale Veröffentlichungsnummer: WO 1998/034822

(56) Entgegenhaltungen:
- EP-A- 0 460 364
- DE-A- 3 809 101
- DE-A- 4 226 940
- DE-A- 4 430 108

## Beschreibung

Die vorliegende Erfindung bezieht sich auf ein Verfahren und eine Vorrichtung zur Regelung der Längsdynamik eines Fahrzeugs bei dem ein oder mehrere Sollwerte nach Maßgabe des; Fahrerwillens und sonstiger Einflußgrößen bestimmt werden und ein Motor nach Maßgabe eines oder mehrerer Motor-Sollwerte und eine Bremse nach Maßgabe eines oder mehrerer Breis-sollwerte geregelt wird.

Die Erfindung bezieht sich auf die Längsdynamikregelungen eines KFZ.

Moderne Verfahren und Vorrichtungen zur Regelung der Längsdynamik eines Fahrzeugs umfassen einen durch ein Motormanagement bzw, eine entsprechende Einrichtung geregelten Motor, eine geregelte Bremse, ein geregeltes Getriebe sowie eine komplexe Fahrzeugdynamikregelung , die nach Maßgabe von Fahrerwillen und inneren wie äußeren Betriebszuständen des Fahrzeugs Sollwerte für Bremse, Getriebe und Motor vorgibt.

Ein modernes Motormanagement empfängt als Eingangsgröße oft das Motor-Sollmoment, die Bremse kann als Eingangsgröße den Brems-Solldruck empfangen. Diese Sollwerte werden durch eine ICC-Regelung erzeugt, die ihrerseits die weiter oben erwähnten Einflußgrößen empfängt. Hierzu gehören der Fahrerwillen, der sich über Fahr- und Bremspedal dem Fahrzeug mitteilt, verschiedene durch Sensoren erfaßte Größen wie Geschwindigkeit, Längs- und Querbeschleunigung, Abstand und Relativgeschwindigkeit bezüglich eines vorausfahrenden Fahrzeugs usw. Bei Längsdynamikregelungen beeinflussen verschiedene Komponenten das Motor-Sollmoment, bzw, den Brems-Solldruck: Zum einen werden die genannten Sollwerte nach Maßgabe einer vorgegebenen Sollbeschleunigung ermittelt (die sich ihrerseits wieder aus verschiedenen Komponenten ergibt, beispielsweise Fahreranforderung, Kurvengeschwindigkeitssteuerung, Fahrzeugfolgeregelung usw.). Daneben gibt es die Antriebsschlupfregelung ASR (gattungsgemäße DE-A1-3809101, DE-A1-4430108)), mit der das Durchdrehen von Rädern verhindert wird. ASR-Regelungen vermindern tendenziell die Drehmomentanforderung an den Motor. Die Motorschleppmomentregelung MSR (DE-A1-4226940) verhindert ein Blockieren der Räder beim Herunterschalten, beispiels-weise vom dritten in den zweiten Gang bei glatter Fahrbahn und Hinterradantrieb. Die MSR-Regelung erhöht tendenziell die Drehmomentanforderung. Ein automatisches Stabilitätsmanagementsystem ASMS greift insbesondere auf die Bremsen der einzelnen Räder zu, kann sich aber auch auf Getriebe und Motor auswirken. Mit einer ASMS-Regelung, auch als Fahrstabilitätsregelsystem bekannt, können beispielsweise einzelne Räder wahlweise abgebremst werden, um das Schleudern eines Fahrzeugs zu verhindern.

Die obengenannten Komponenten greifen damit in die Ermittlung von Sollwerten für Motor, Getriebe und/oder Bremse ein. Bisher ist die gemeinsame Verarbeitung aller Einflußgrößen für die Sollwerterstellung jedoch nicht zufriedenstellend gelöst.

Aufgabe der vorliegenden Erfindung ist es, ein Verfahren und eine Vorrichtung zur Regelung der Längsdynamik eines Fahrzeugs anzugeben, bei denen die Sollwertvorgabe für Motor und/oder Bremse einfach und den einzelnen Fahrsituationen angemessen erfolgt.

Diese Aufgabe wird mit den Merkmalen der unabhängigen Ansprüche gelöst. Abhängige Ansprüche sind auf bevorzugte Ausführungsformen der Erfindung gerichtet.

Nachfolgend werden einzelne erfindungsgemäße Ausführungsformen Bezug nehmend auf die Zeichnungen beschrieben, es zeigen:
- Fig. 1: eine erste erfindungsgemäße Ausführungsform,
- Fig. 2: eine zweite erfindungsgemäße Ausführungsform,
- Fig. 3 bis 5: einzelne Zuordnungen des Koordinators, bzw. der Koordinationsfunktion zu verschiedenen Systemen.

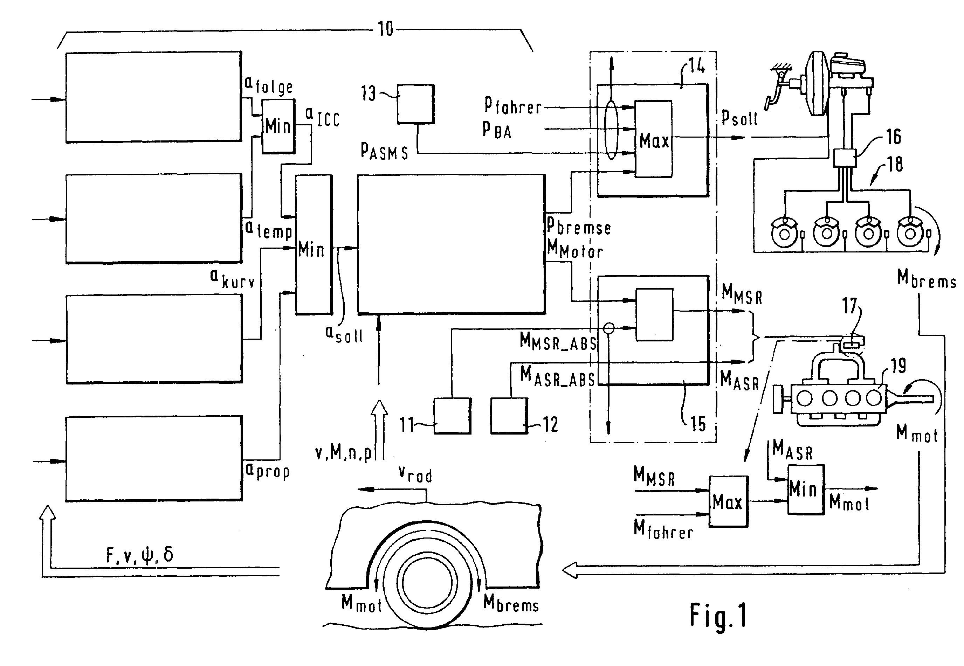

Bezug nehmend auf Fig. 1 wird eine erste erfindungsgemäße Ausführungsform beschrieben. Bezugsziffer 19 bezeichnet den zu regelnden Motor, Bezugsziffer 18 die zu regelnde, mit einem ABS-Regelsystem ausgestatteten Bremsanlage. Bezugsziffer 10 bezeichnet eine Einrichtung, die aus verschiedenen Größen Sollwerte für Motor und Bremse erzeugt. Die Einrichtung 10 erzeugt dabei ihre Sollwerte unter der Annahme, daß das Fahrzeug ordnungsgemäß auf der Fahrbahn haftet, also Räder weder blockieren noch durchdrehen. Die Einrichtung 10 kann eine ICC-Längsdynamikregelung oder eine Geschwindigkeits-regelanlage (CC) sein (ICC = "Intelligent Cruise Control"). Bezugsziffer 17 bezeichnet die Motorregelung, die nach Maßgabe von Motor-Sollwerten den Motor regelt. Bezugsziffer 16 bezeichnet die Bremsregelung, die nach Maßgabe von Brems-Sollwerten die Bremsanlage 18 regelt.

Erfindungsgemäß wird nun vorgeschlagen, durch verschiedene Einrichtungen weitere geeignete Sollwerte für die Motor- bzw. Bremsregelung zu erzeugen und aus diesen funktional parallel ermittelten Sollwerten in einer Koordinationseinrichtung 15 die Sollwerte für Bremse 18 und/oder Motor 19 bzw. deren Regler 16 und 17geeignet zu ermitteln.

Es wird nun zunächst die Erzeugung eines Brems-Sollwerts genauer beschrieben. Der für die Bremse erzeugte Sollwert ist dabei der Brems-Solldruck pₛₒₗₗ. Verschiedene Einrichtungen erzeugen nun funktional parallel Zwischen-Sollwerte, bzw. Zwischen-Solldrücke. Ein erster Zwischen-Solldruck p_{bremse} wird von der Einrichtung 10 erzeugt. Ein weiterer Zwischen-Solldruck p_{ASMS} wird vom Fahrstabilitätsregelsystem erzeugt. Ein weiterer Zwischen-Bremsdruck p_{BA} wird von einem Bremsassistenten erzeugt. Weitere Zwischen-Solldrücke können von anderen Komponenten in geeigneter Weise ermittelt werden. Diese funktional parallel ermittelten Zwischen-Sollwerte bzw. Zwischen-Solldrücke werden von einer Koordinationseinrichtung 14 empfangen, aus ihnen wird in geeigneter Weise der Brems-Sollwert bzw. Brems-Solldruck pₛₒₗₗ ermittelt. Ein Kriterium für die Koordinationseinrichtung 14 kann es sein, aus den von ihr empfangenen Zwischen-Sollwerten bzw. Zwischen-Solldrücken den Maximalwert auszuwählen und ihn als Brems-Sollwert bzw. Brems-Solldruck pₛₒₗₗ an die Bremsanlage auszugeben.

Nachfolgend wird die Erzeugung von Motor-Sollwerten beschrieben. Hierbei ist zu berücksichtigen, daß moderne Motorregelungen, bei denen das sog. "E-Gas-Konzept" verwirklicht ist (elektronisches Gaspedal), zwei Motor-Sollmomente empfangen, nämlich M_{MSR} und M_{ASR}, vorzugsweise aus dem ABS-Regelsystem. Dabei reflektiert das Motor-Sollmoment M_{MSR} Ergebnisse der Motorschleppmomentregelung und das Motor-Sollmoment M_{ASR} Ergebnisse aus der Motor-Antriebsschlupfregelung. Diese Motor-Sollwerte werden aus Zwischen-Sollwerten ermittelt. Ein Zwischen-Sollwert Mₘₒₜₒᵣ wird von der Einrichtung 10 erzeugt. Ein weiterer Zwischen-Sollwert kann beispielsweise in Form eines Zwischen-Sollmoments von der Antriebsschlupfregelung 12 erzeugt werden. Ein weiterer Zwischen-Sollwert kann von der Motorschleppregelung 11 in Form eines Zwischen-Sollmoments erzeugt werden. Diese Zwischen-Sollwerte bzw. Zwischen-Sollmomente werden einer Koordinationseinrichtung 15 eingegeben, die in geeigneter Weise daraus Motor-Sollwerte ermittelt. Auch hier wird so verfahren, daß verschiedene Zwischen-Sollwerte unter verschiedenen Aspekten funktional parallel ermittelt werden und aus den damit parallel anliegenden Zwischen-Sollwerten der bzw. die Motor-Sollwerte bestimmt werden.

Wenn der Motor 19 lediglich einen einzigen Motor-Sollwert bzw. ein einziges Motor-Sollmoment empfängt, können die Zwischen-Sollwerte bzw. Zwischen-Sollmomente beispielsweise durch eine Maximalwertauswahl gebildet werden.

In Fig. 1 ist eine Ausführungsform gezeigt, bei der ein nach Maßgabe einer Sollbeschleunigung ermitteltes Zwischen-Sollmoment sowie je ein aus der Motorschleppmomentregelung 11 bzw. der Antischlupfregelung 12 ermitteltes Zwischen-Sollmoment vorhanden sind. Außerdem wird ein Motor mit einem E-Gas-Motormanagement angenommen. Für diesen Fall wird aus dem nach Maßgabe der Sollbeschleunigung in der Einrichtung 10 ermittelten Zwischen-Sollmoment Mₘₒₜₒᵣ und dem durch die Motorschleppmomentregelung 11 erzeugten Zwischen-Sollmoment der Maximalwert ausgesucht und als Motor-Sollmoment M_{MSR} an den Motor ausgegeben. Das durch die Antischlupfregelung 12 ermittelte Zwischen-Sollmoment wird als Motor-Sollmoment M_{ASR} an den Motor ausgegeben.

Die vom Fahrer des Fahrzeugs gewünschte Drehmomentanforderung kann in verschiedener Weise verarbeitet werden: eine Möglichkeit ist, diese Fahrerdrehmomentanforderung als ein weiteres Zwischen-Sollmoment bzw. einen weiteren Zwischen-Sollwert anzusehen und diesen in die Koordinationseinrichtung 15 einzugeben, wo er geeignet verarbeitet wird.
Fig. 1 zeigt jedoch eine Ausführungsform, in der die Verarbeitung des unmittelbaren Fahrerwunsches nicht im Koordinator 15 erfolgt, sondern in der Motorelektronik 17. Dort wird zunächst aus Fahrer-Momentanforderung M_{fahrer} und aus Motor-Sollmoment F_{MSR} der Maximalwert ermittelt. Weiterhin wird aus diesem Maximalwert und dem Motor-Sollmoment M_{ASR} der Minimalwert herausgesucht und das so entstandene Sollmoment als Mₘₒₜ zur Regelung des Motors verwendet.

Dadurch, daß bei der Ermittlung von Sollwerten für Bremse und/oder Motor die Zwischen-Sollwerte parallel ermittelt werden, können diese gleichzeitig untersucht und auf bestimmte Beziehungen zueinander überprüft werden. Nach Maßgabe dieser Überprüfungen können dann wechselweise Beeinflussungen von Motor-Sollwert und Brems-Sollwert erfolgen oder auch Rückwirkungen auf die einzustellende Sollbeschleunigung vorgenommen werden. Wenn beispielsweise das aus der ICC-Regelung bzw. Einrichtung 10 kommende Zwischen-Sollmoment Mₘₒₜₒᵣ kleiner ist als das durch die Motorschleppregelung erzeugte Zwischen-Sollmoment, kann durch eine geeignete Einrichtung eine Rückwirkung auf die durch den Beschleunigungsregler erzeugte Sollbeschleunigung erfolgen.

Die Koordinationseinrichtung 14 zur Bestimmung des Brems-Sollwerts empfängt in der gezeigten Ausführungsform neben dem Zwischen-Solldruck p_{brems} aus der ICC-Regelung 10 den Zwischen-Solldruck p_{ASMS} aus dem Fahrstabilitätsregelsystem 13, einen Zwischen-Solldruck p_{BA} aus einem Bremsassistenten, sowie dem Zwischen-Solldruck nach Maßgabe des Fahrerwunsches P_{fahrer}. Wenn einer der Werte p_{ASMS}, p_{BA} oder p_{fahrer} in der beispielhaft gezeigten Maximalwertsbildung überwiegen, kann dies beispielsweise zum Abschalten der ICC-Funktion bzw. des ICC-Reglers 10 führen.

Fig. 1 zeigt eine Koordinationseinrichtung 14 für den Brems-Solldruck sowie eine Koordinationseinrichtung 15 für das oder die Motor-Sollmomente. Diese Koordinationseinrichtungen 14 und 15 können einzeln oder in Kombination vorgesehen sein.

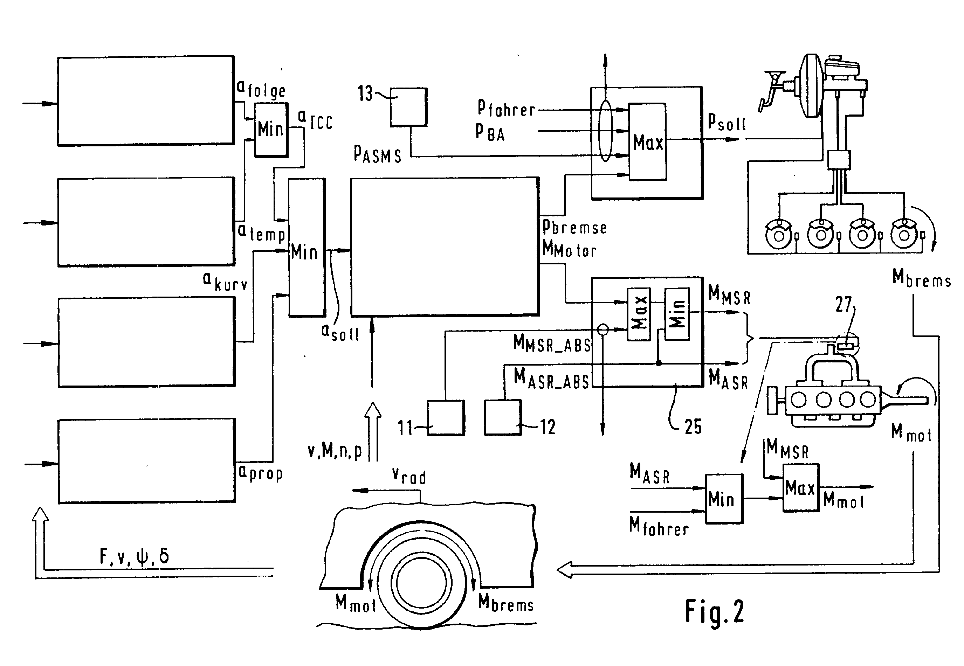

Fig. 2 zeigt unter 25 eine Abwandlung der Koordinationseinrichtung 15 aus Fig. 1. Wie die Koordinationseinrichtung 15 aus Fig. 1 empfängt sie Zwischen-Sollmomente aus ICC-Regelung 10, aus Antriebsschlupfregelung 12 und aus Motorschleppmomentregelung 11. Die Koordinatoreinrichtung 25 arbeitet jedoch mit einem Motormanagement zusammen, in dem die Eingänge der Sollwerte wie in Fig. 2 dargestellt verarbeitet werden. In der Koordinationseinrichtung 25 wird dann aus Zwischen-Sollmoment der ICC-Regelung 10 und Zwischen-Sollmoment der Motor-Schleppmomentregelung 11 der Maximalwert ermittelt. Aus dem so ermittelten Wert und dem Zwischen-Sollmoment der Antischlupfregelung wird das Minimum ermittelt, der so ermittelte Wert wird als Motor-Sollmoment M_{MSR} dem Motormanagement zugeführt. Die Verarbeitung der Motor-Sollmomente M_{MSR} und M_{ASR} in der Motorelektronik 17 erfolgt dabei in der Weise, daß in der Motorelektronik 27 zunächst aus Motor-Sollmoment M_{ASR} und Fahreranforderung M_{fahrer} der Minimalwert herausgesucht wird und aus diesem Minimalwert und dem Motor-Sollmoment M_{MSR} der Maximalwert herausgesucht wird, dieser Maximalwert wird dann als Motormoment Mₘₒₜ zur Regelung des Motors verwendet.

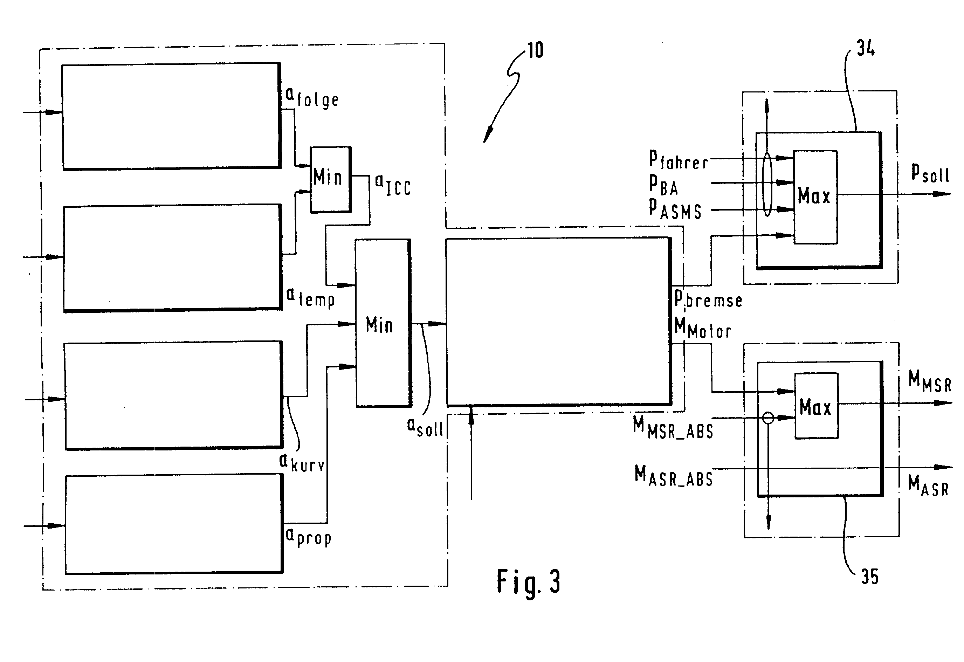

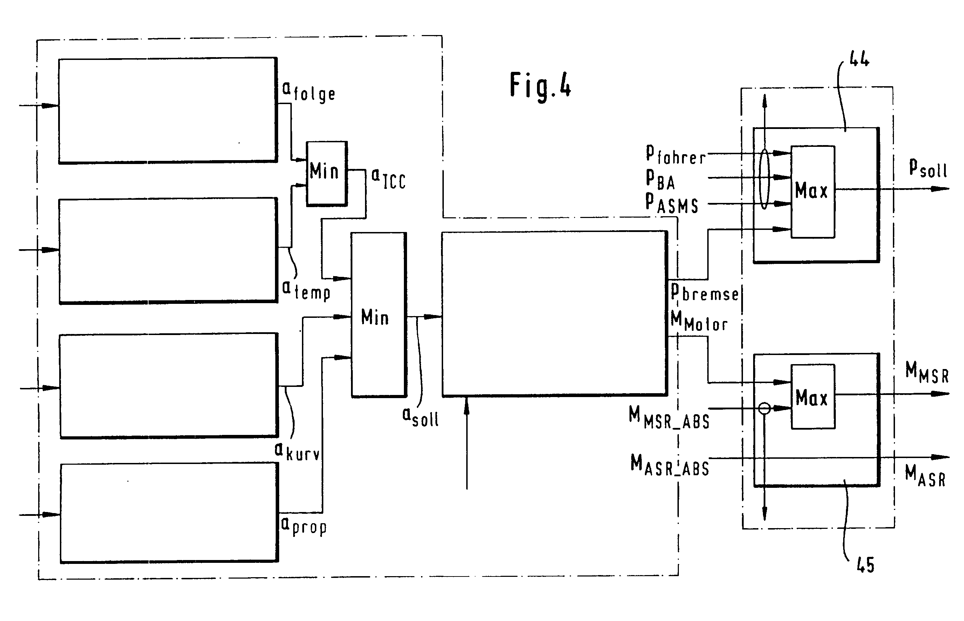

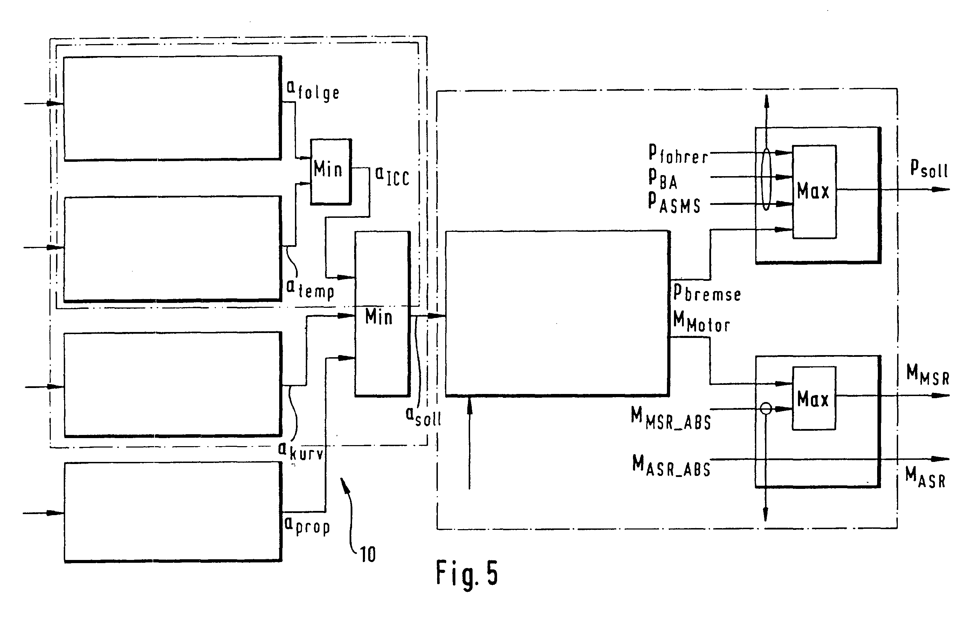

Fig. 3 bis 5 zeigen einzelne funktionelle Zuordnungen der ICC-Regelung 10, der Koordinatoren 14 und 15 sowie der Regelungselektroniken 16 und 17 für Bremse und Motor. In Bild 3 ist eine Ausführungsform gezeigt, in der ICC-Regelung 10, Koordinationseinrichtung 34 für die Bremse und Koordinationseinrichtung 35 für den Motor jeweils getrennte funktionale Blöcke sind. Diese Trennung kann beispielsweise in der Weise erfolgen, daß die einzelnen Aufgaben durch unterschiedliche Prozessoren, ggf. auch unterschiedlichen Platinen und weiter ggf. an unterschiedlichen Stellen im Fahrzeug vorgenommen werden.

Bild 4 zeigt eine Ausführungsform, bei der die beiden Koordinationseinrichtungen 44 und 45 zu einer Funktion bzw. einem funktionalen Block zusammengefaßt sind. Diese zusammenfassung kann in der Weise erfolgen, daß sie beispielsweise durch denselben Prozessor oder zumindest auf derselben Platine ausgeführt werden. Bei Ausführung der Koordinationsaufgaben durch denselben Prozessor entsteht der Vorteil, daß weniger Schnittstellen entworfen und betrieben werden müssen.

Bild 5 zeigt eine Ausführungsform, in der Teile der ICC-Regelung 10 eine funktionelle Gruppe bilden und der eigentliche Beschleunigungsregler zusammen mit den Koordinatoren eine weitere funktionelle Gruppe darstellen. Diese funktionellen Gruppen können abermals in der Weise aufgebaut sein, daß sie jeweils durch eigene Prozessoren, ggf. auf eigenen Platinen und weiter ggf. an unterschiedlichen Stellen im Fahrzeug ausgeführt bzw. realisiert werden. Teile der ICC-Regelung sind dabei in der weise in einem funktionalen Block vereinigt, daß letzterer eine Sollbeschleunigung als Ausgabe liefert, die durch den anderen funktionalen Block empfangen und weiterverarbeitet wird. Diese Ausführungsform hat den Vorteil, daß in einfacher weise die Rückwirkung auf die angeforderten Sollbeschleunigung in gewissen Betriebszuständen vorgenommen werden kann. Es ergeben sich weiter Vorteile hinsichtlich der Anzahl und der Gestaltung von Schnittstellen. Dadurch, daß weniger Schnittstellen vorhanden sind, können leichter Verknüpfungen zwischen verschiedenen Signalen vorgenommen werden, beispielsweise zur Plausibilitätsüberprüfung, für Rückwirkungen und Querauswirkungen, und weitere Abfragen.

## Patentansprüche

1. Verfahren zur Regelung der Längsdynamik eines Fahrzeugs bei dem ein oder mehrere Sollwerte nach Maßgabe des Fahrerwillens und sonstiger Einflußgrößen bestimmt werden und ein Motor (19) nach Maßgabe eines oder mehrerer Motor-Sollwerte (M_{MSR,ASR}) und eine Bremse nach Maßgabe eines oder mehrerer Brems-Sollwerte (Pₛₒₗₗ) geregelt wird,
**dadurch gekennzeichnet, daß** der bzw. die Motor-Sollwerte bestimmt werden nach Maßgabe von funktional parallel ermittelten Zwischen-Sollwerten, die von einer ICC- Beschleunigungsregelung (10) sowie von einer
Motorschleppmomentregelung (11) und einer
Antriebsschlupfregelung (12) erzeugt werden und der bzw. die Brems-Sollwerte bestimmt werden nach Maßgabe von funktional parallel ermittelten Zwischen-Sollwerten, die durch eine ICC-Regelung (10) und ein Fahrstabilitätsregelsystem und eine Bremsassistenz und den Fahrer vorgeben sind.

2. Verfahren nach Anspruch 1, **dadurch gekennzeichnet, daß** der Sollwert ein Sollmoment ist.

3. Verfahren nach Anspruch 1, **dadurch gekennzeichnet, daß** ein Motor-Sollmoment als Maximalwert aus Zwischen-Sollmomenten der ICC-Regelung (10) und der
Motorschleppmomentregelung (11) ermittelt wird.

4. Verfahren nach Anspruch 2, **dadurch gekennzeichnet, daß**
ein Motor-Sollmoment als Minimalwert aus dem durch die Antriebsschlupfregelung (12) erzeugten Zwischen-Sollwert und dem gemäß Anspruch 3 ermittelten Maximalwert ermittelt wird.

5. Verfahren nach einem der Ansprüche 1 bis 4, **dadurch gekennzeichnet, daß** dann, wenn das von der Motorschleppmomentregelung (11) erzeugte Zwischen-Sollmoment größer ist als das von der ICC-Regelung erzeugte Zwischen-Sollmoment, eine verstärkte Bremsvorgabe erzeugt wird.

6. Verfahren nach einem der Ansprüche 1 bis 5, **dadurch gekennzeichnet, daß** mehrere Zwischen-Sollwerte nach Maßgabe des Fahrerwillens und/oder der sonstigen Einflußgrößen bestimmt werden und der Brems-Sollwert nach Maßgabe der ermittelten Zwischen-Sollwerte bestimmt wird.

7. Verfahren nach Anspruch 6, **dadurch gekennzeichnet, daß** der Sollwert ein Solldruck ist.

8. Verfahren nach Anspruch 7, **dadurch gekennzeichnet, daß** der Brems-Solldruck als Maximalwert der Zwischen-Solldrücke erzeugt wird.

9. Vorrichtung zur Regelung der Längsdynamik eines Fahrzeugs, mit einer Einrichtung (17), mit der ein Motor (19) nach Maßgabe eines oder mehrerer Motor-Sollwerte (M_{MSR, ASR}) geregelt wird,
einer Einrichtung (10-12, 15) zur Bestimmung des Motor-Sollwerts nach Maßgabe von mittels Sensoren erfaßten Fahrerwillens und sonstiger Einflußgrößen, einer Einrichtung (16), mit der eine Bremse nach Maßgabe eines Brems-Sollwerts pₛₒₗₗ in Abhängigkeit von mittels Sensoren erfaßten Fahrerwillens und sonstiger Einflußgrößen geregelt wird,
**gekennzeichnet durch** eine ICC-Regelung (10) und eine Motorschleppmomentregelung (11) und eine Antriebsschlupfregelung (12) zur Bestimmung von Zwischen-Sollwerte nach Maßgabe von mittels Sensoren erfaßten Fahrerwillen und der sonstigen Einflußgrößen, und einer Koordinationseinrichtung (15) zur Bestimmung des Motor-Sollwerts nach Maßgabe der ermittelten Zwischen-Sollwerte.

10. Vorrichtung nach Anspruch 9, **dadurch gekennzeichnet, daß** der Sollwert ein Sollmoment ist.

11. Vorrichtung nach Anspruch 9, **dadurch gekennzeichnet, daß** die Koordinationseinrichtung (15) eine Einrichtung aufweist, um aus den Zwischen-Sollmomenten aus Motorschleppmomentregelung (11) und ICC-Regelung (10) den Maximalwert zu ermitteln wobei dieser Wert als ein Motor-Sollmoment ausgegeben wird.

12. Vorrichtung nach Anspruch 9 und 11, **dadurch gekennzeichnet, daß** die Koordinationseinrichtung (15) eine Einrichtung aufweist, die aus dem Zwischen-Sollwert der Antriebsschlupfregelung (12) sowie dem durch die in Anspruch 11 beschriebene Einrichtung ermittelten Maximalwert den Minimalwert ermittelt, wobei dieser als ein Motor-Sollmoment ausgegeben wird.

13. Vorrichtung nach einem der Ansprüche 9, 11 und 12, **gekennzeichnet durch** eine Einrichtung zum Modifizieren der Sollbeschleunigung für die ICC-Regelung (10) dann, wenn das Zwischen-Sollmoment aus Motorschleppmomentregelung (11) größer ist als das Zwischen-Sollmoment aus ICC-Regelung (10).

14. Vorrichtung nach Anspruch 9, **gekennzeichnet durch** mehrere Einrichtungen (10, 13) zur Bestimmung von Zwischen-Sollwerten nach Maßgabe von mittels Sensoren erfaßten Fahrerwillen und der sonstigen Einflußgrößen, und einer Koordinationseinrichtung (14) zur Bestimmung des Brems-Sollwerts nach Maßgabe der ermittelten Zwischen-Sollwerte.

15. Vorrichtung nach Anspruch 14, **dadurch gekennzeichnet, daß** der Sollwert ein Solldruck ist.

16. Vorrichtung nach Anspruch 14 oder 15, **gekennzeichnet durch** eine oder mehrere der folgenden Einrichtungen zur Erzeugung von Zwischen-Sollwerten: ICC-Regelung (10), Antischleuderregelung (13), Bremsassistent, Bremspedal.

17. Vorrichtung nach Anspruch 14 und 16, **dadurch gekennzeichnet, daß** die Koordinationseinrichtung (14) eine Einrichtung enthält, die aus den anliegenden Zwischen-Solldrücken einen Maximalwert aussucht und diesen als Brems-Solldruck ausgibt.

## Claims

1. Method for controlling the longitudinal dynamics of a vehicle, in which one or several desired value/s is/are determined according to the driver's intention and other influencing variables and in which an engine (19) is controlled according to one or several desired value/s of the engine (M_{MSR, ASR}) and a brake is controlled according to one or several desired value/s of the brake (pₛₒₗₗ), **characterized in that** the desired value/s of the engine is/are determined according to intermediate desired values determined in a functionally parallel manner, said intermediate desired values being generated by an ICC acceleration control system (10) as well as by an engine drag torque control system (11) and by a traction control system (12), and **in that** the desired value/s of the brake is/are determined according to intermediate desired values determined in a functionally parallel manner, said intermediate desired values being given by an ICC control system (10) and by a driving stability control system and by a brake assistance system and by the driver.

2. Method according to claim 1, **characterized in that** the desired value is a desired torque.

3. Method according to claim 1, **characterized in that** a desired torque of the engine is determined as a maximum value from intermediate desired torques of the ICC control system (10) and the engine drag torque control system (11).

4. Method according to claim 2, **characterized in that** a desired torque of the engine is determined as a minimum value from the intermediate desired value generated by the traction control system (12) and from the maximum value determined according to claim 3.

5. Method according to any one of claims 1 to 4, **characterized in that** an increased braking set-point is generated if the intermediate desired torque generated by the engine drag torque control system (11) is greater than the intermediate desired torque generated by the ICC control system.

6. Method according to any one of claims 1 to 5, **characterized in that** several intermediate desired values are determined according to the driver's intention and/or the other influencing variables, and **in that** the desired value of the brake is determined according to the determined intermediate desired values.

7. Method according to claim 6, **characterized in that** the desired value is a desired pressure.

8. Method according to claim 7, **characterized in that** the desired pressure of the brake is generated as a maximum value of the intermediate desired pressures.

9. Apparatus for controlling the longitudinal dynamics of a vehicle, with a device (17) by means of which an engine (19) is controlled according to one or several desired value/s of the engine (M_{MSR, ASR}),
with a device (10-12, 15) for determining the desired value of the engine according to the driver's intention and other influencing variables, said driver's intention being detected by means of sensors, with a device (16) by means of which a brake is controlled according to a desired value of the brake peon in dependence on the driver's intention and other influencing variables, said driver's intention being detected by means of sensors,
**characterized by** an ICC control system (10) and an engine drag torque control system (11) and a traction control system (12) for determining intermediate desired values according to the driver's intention and the other influencing variables, said driver's intention being detected by means of sensors, and a coordinating device (15) for determining the desired value of the engine according to the determined intermediate desired values.

10. Apparatus according to claim 9, **characterized in that** the desired value is a desired torque.

11. Apparatus according to claim 9, **characterized in that** the coordinating device (15) has a device for determining the maximum value from the intermediate desired torques from the engine drag torque control system (11) and the ICC control system (10), wherein this value is outputted as a desired torque of the engine.

12. Apparatus according to claim 9 and 11, **characterized in that** the coordinating device (15) has a device that determines the minimum value from the intermediate desired value of the traction control system (12) as well as from the maximum value determined by the device described in claim 11, wherein said minimum value is outputted as a desired torque of the engine.

13. Apparatus according to any one of claims 9, 11 and 12, **characterized by** a device for modifying the desired acceleration for the ICC control system (10) if the intermediate desired torque from the engine drag torque control system (11) is greater than the intermediate desired torque from the ICC control system (10).

14. Apparatus according to claim 9, **characterized by** several devices (10, 13) for determining intermediate desired values according to the driver's intention and the other influencing variables, said driver's intention being detected by means of sensors, and a coordinating device (14) for determining the desired value of the brake according to the determined intermediate desired values.

15. Apparatus according to claim 14, **characterized in that** the desired value is a desired pressure.

16. Apparatus according to claim 14 or 15, **characterized by** one or several of the following devices for generating intermediate desired values: ICC control system (10), anti-skid control system (13), brake assistance system, brake pedal.

17. Apparatus according to claim 14 and 16, **characterized in that** the coordinating device (14) contains a device that selects a maximum value from the existing intermediate desired pressures and outputs this maximum value as the desired pressure of the brake.

## Revendications

1. Procédé de régulation de la dynamique longitudinale d'un véhicule, dans lequel une ou plusieurs valeurs de consigne sont définies selon la volonté du conducteur et selon d'autres grandeurs d'influence, et un moteur (19) est régulé selon une ou plusieurs valeurs de consigne de moteur (M_{MSR, ASR}), et un frein est réglé selon une ou plusieurs valeurs de consigne de freinage (Pₛₒₗₗ),
**caractérisé en ce que** la ou les valeurs de consigne de moteur sont définies selon des valeurs de consigne intermédiaires déterminées fonctionnellement en parallèle et qui sont produites par une régulation d'accélération ICC (10), ainsi que par une régulation du couple résistant du moteur (11) et une régulation du glissement d'entraînement (12), et **en ce que** la ou les valeurs de consigne de freinage sont définies selon des valeurs de consigne intermédiaires déterminées fonctionnellement en parallèle et qui sont prescrites par une régulation ICC (10) et un système de régulation de stabilité directionnelle et une assistance au freinage et le conducteur.

2. Procédé selon la revendication 1, **caractérisé en ce que** la valeur de consigne est un couple de consigne.

3. Procédé selon la revendication 1, **caractérisé en ce qu'**un couple de consigne de moteur est déterminé en tant que valeur maximale à partir de couples de consigne intermédiaires de la régulation ICC (10) et de la régulation du couple résistant du moteur (11).

4. Procédé selon la revendication 2, **caractérisé en ce qu'**un couple de consigne de moteur est déterminé en tant que valeur minimale à partir de la valeur de consigne intermédiaire produite par la régulation du glissement d'entraînement (12) et à partir de la valeur maximale déterminée selon la revendication 3.

5. Procédé selon une des revendications 1 à 4, **caractérisé en ce que**, si le couple de consigne intermédiaire produit par la régulation du couple résistant du moteur (11) est plus grand que le couple de consigne intermédiaire produit par la régulation ICC, une prescription de freinage renforcée est produite.

6. Procédé selon une des revendications 1 à 5, **caractérisé en ce que** plusieurs valeurs de consigne intermédiaires sont définies selon la volonté du conducteur et/ou selon d'autres grandeurs d'influence, et **en ce que** la valeur de consigne de freinage est définie selon les valeurs de consigne intermédiaires déterminées.

7. Procédé selon la revendication 6, **caractérisé en ce que** la valeur de consigne est une pression de consigne.

8. Procédé selon la revendication 7, **caractérisé en ce que** la pression de consigne de freinage est produite en tant que valeur maximale des pressions de consigne intermédiaires.

9. Dispositif de régulation de la dynamique longitudinale d'un véhicule, avec un équipement (17) avec lequel un moteur (19) est régulé selon une ou plusieurs valeurs de consigne de moteur (M_{MSR, ASR}),
un équipement (10-12, 15) pour la définition de la valeur de consigne de moteur selon la volonté du conducteur détectée au moyen de capteurs et selon d'autres grandeurs d'influence, un équipement (16) avec lequel un frein est régulé selon une valeur de consigne de freinage pₛₒₗₗ en fonction de la volonté du conducteur détectée au moyen de capteurs,
**caractérisé par** une régulation ICC (10) et une régulation du couple résistant du moteur (11) et une régulation du glissement d'entraînement (12) pour la définition de valeurs de consigne intermédiaires selon la volonté du conducteur détectée au moyen de capteurs et selon autres grandeurs d'influence, et un équipement de coordination (15) pour la définition de la valeur de consigne de moteur selon les valeurs de consigne intermédiaires déterminées.

10. Dispositif selon la revendication 9, **caractérisé en ce que** la valeur de consigne est un couple de consigne.

11. Dispositif selon la revendication 9, **caractérisé en ce que** l'équipement de coordination (15) présente un équipement pour déterminer, à partir des couples de consigne intermédiaires issus de la régulation du couple résistant du moteur (11) et de la régulation ICC (10), la valeur maximale, cette valeur étant fournie en tant que couple de consigne de moteur.

12. Dispositif selon les revendications 9 et 11, **caractérisé en ce que** l'équipement de coordination (15) présente un équipement qui, à partir de la valeur de consigne intermédiaire de la régulation du glissement d'entraînement (12) ainsi qu'à partir de la valeur maximale déterminée par l'équipement décrit dans la revendication 11, détermine la valeur minimale, cette valeur étant fournie en tant que couple de consigne de moteur.

13. Dispositif selon une des revendications 9, 11 et 12, **caractérisé par** un équipement destiné à modifier l'accélération de consigne pour la régulation ICC (10) si le couple de consigne intermédiaire issu de la régulation du couple résistant du moteur (11) est plus grand que le couple de consigne intermédiaire issu de la régulation ICC (10).

14. Dispositif selon la revendication 9, **caractérisé par** plusieurs équipements (10, 13) pour la définition de valeurs de consigne intermédiaires selon la volonté du conducteur détectée au moyen de capteurs et selon les autres grandeurs d'influence, et un équipement de coordination (14) pour la définition de la valeur de consigne de freinage selon les valeurs de consigne intermédiaires déterminées.

15. Dispositif selon la revendication 14, **caractérisé en ce que** la valeur de consigne est une pression de consigne.

16. Dispositif selon la revendication 14 ou 15, **caractérisé par** un ou plusieurs des équipements suivants pour la production de valeurs de consigne intermédiaires: régulation ICC (10), régulation anti-dérapage (13), aide au freinage, pédale de frein.

17. Dispositif selon les revendications 14 et 16, **caractérisé en ce que** l'équipement de coordination (14) contient un équipement qui, à partir des pressions de consigne intermédiaires voisines, recherche une valeur maximale et fournit celle-ci en tant que pression de consigne de freinage.
